Europäisches Patentamt

European Patent Office

Office européen des brevets

(19)

(11) Veröffentlichungsnummer: **0 210 515**
**B1**

(12) # EUROPÄISCHE PATENTSCHRIFT

(45) Veröffentlichungstag der Patentschrift:
28.06.89

(21) Anmeldenummer: 86109593.3

(22) Anmeldetag: 14.07.86

(51) Int. Cl.⁴: **A 01 C   7/10**

(54) Verteilmaschine, insbesondere Sämaschine.

(30) Priorität: 01.08.85 DE 3527613

(43) Veröffentlichungstag der Anmeldung:
04.02.87 Patentblatt 87/06

(45) Bekanntmachung des Hinweises auf die Patenterteilung: 28.06.89 Patentblatt 89/26

(84) Benannte Vertragsstaaten:
DE FR GB IT

(56) Entgegenhaltungen:
EP–A– 0 150 243
DE–A– 3 319 833
NL–A– 7 901 187
US–A– 2 942 698
Prospekt AMAZONE D7 mit Druckvermerk D559*,
April 1982

(73) Patentinhaber: Amazonen-Werke H. Dreyer GmbH &
Co. KG
Am Amazonenwerk 9-13
D-4507 Hasbergen-Gaste (DE)

(72) Erfinder: Gattermann, Bernd
Eichenwall 3
D-2872 Hude i.O. (DE)
Erfinder: Steenken, Bernhard
Waldhöfe 17
D-4475 Sögel 2 (DE)

## Beschreibung

Die Erfindung betrifft eine Verteilmaschine, insbesondere Sämaschine, gemäß des Oberbegriffes des Anspruches 1.

Eine derartige Drillmaschine ist bereits durch den Prospekt Amazone D7, mit Druckvermerk D559*4.82 bekannt. Die Säwelle bei dieser bekannten Verteilmaschine ist in den aufrechten Wandungen des die Säräder umgebenden Sägehäuses frei drehbar gelagert. Vor allem wenn die Säwelle mit einem als Freilaufgetriebe ausgebildeten Regelgetriebe angetrieben wird, entstehen bei realtiv hohen Fahrgeschwindigkeiten große Impulse an der Ausgangswelle des Regelgetriebes. Derartige Impulse können teilweise bei einer derartigen Verteilmaschine, wie durch die DE-PS 33 19 833 bekannt ist, durch ein zwischen dem Regelgetriebe und der Säwelle angeordnetes drehelastisches Element aufgefangen werden. Unter schwierigen Bedingungen ist jedoch dieses drehelastische Element zum Auffangen der Impulse nicht ausreichend.

Des weiteren beschreibt die europäische Offenlegungsschrift 01 50 243 eine Sämaschine mit einem Vorratsbehälter und einer Dosiereinrichtung, die aus mehreren Dosiereinheiten besteht und auf einer Säwelle angeordnete und zwischen zwei aufrechten Wandungen befindliche Säräder enthält, wobei die Säwelle angetrieben wird. Jedes Särad ist in einem Sägehäuse angeordnet. Ein Teil dieses Sägehäuses, welches der Umfangsfläche des Dosierrades zugewandt ist, ist schwenkbar angeordnet. Dieses schwenkbar angeordnete Umfangsflächenteil des Gehäuses wird mittels einer Feder gegen das Särad gedrückt. Dieser Teil wird federnd gegen das Dosierrad gedrückt, damit Fremdkörper durch die Dosiermechanik hindurchtransportiert werden können, ohne Verstopfungen zu verursachen. Um bei der bekannten Sämaschine die Säwellen ausbauen zu können, müssen zunächst mehrere Schrauben gelöst werden, um die Lagerelemente vom Rahmen der Maschine zu lösen. Anschließend kann dann die Säwelle ausgebaut werden.

Der Ausbau der Säwelle, ist bei dieser Sämaschine also sehr arbeitsaufwendig.

Der Erfindung liegt nun die Aufgabe zugrunde, in einfacher Weise eine Vorrichtung zu schaffen, bei der sichergestellt ist, daß die eingestellte Ausbringmenge pro Flächeneinheit auch bei hohen Fahrgeschwindigkeiten der Verteilmaschine bei extremen Voraussetzungen konstant gehalten wird, wobei gleichzeitig eine leichte Montagebzw. Demontagemöglichkeit der Säwelle erreicht wird.

Diese Aufgabe wird erfindungsgemäß durch das Kennzeichen des Patentanspruches 1 gelöst. Infolge dieser Maßnahmen wird einerseits erreicht, daß die bei hohen Fahrgeschwindigkeiten durch das als Freilaufgetriebe ausgebildete Regelgetriebe hervorgerufenen Impulsspitzen nicht dazu führen, daß die Säwelle unkontrolliert weitergedreht wird. Durch die Bremselemente wird die Säwelle jeweils um einen exakt definierten Winkel weitergedreht. Andererseits wird in überraschend einfacher Weise durch die federbelasteten Lagerelemente die erfindungsgemäß gewünschte Bremswirkung erzielt. Des weiteren wird durch diese erfindungsgemäße Maßnahme ein sehr einfacher Aus- und Einbau der Säwelle erzielt. In einer bevorzugten Ausführung ist vorgesehen, daß an den Lagerelementen ein federndes Element angeordnet ist. Aufgrund dieser Maßnahme ist es möglich, bereits sich in der Praxis befindliche Maschinen in einfacher Weise nachzurüsten.

In einer bevorzugten Ausführungsform ist vorgesehen, daß die Lagerelemente als Hebel ausgebildet sind, daß sich zwischen den beiden Enden des Hebels eine einen in radialer Richtung offenen Sektor aufweisende Lagerschale befindet, daß das eine Ende des Hebels an dem Vorratsbehälter und/oder in Wandungen gelagert ist, und daß an dem anderen Ende des Hebels das federnde Element angreift. Infolge dieser Maßnahme wird zunächst erreicht, daß mit einer realtiv geringen Federkraft eine große Bremswirkung erreicht wird. Weiterhin erlaubt diese Ausführung, daß die Hebel in sehr einfacher Weise weggeklappt werden können, so daß dann nach dem Wegklappen der Hebel die Säwelle mit den Särädern ausgebaut werden kann. Dieses ist vor allem von Bedeutung, wenn für die Verteilmaschine für ihre unterschiedlichen Einsatzzwecke verschiedenartig ausgebildete Dosierelemente, wie Getreidesäräder, Bohnensäräder, Düngersäräder etc. vorgesehen sind.

Weitere Einzelheiten der Erfindung sind den übrigen Unteransprüchen, der Bespielsbeschreibung und den Zeichnungen zu entnehmen. Hierbei zeigen

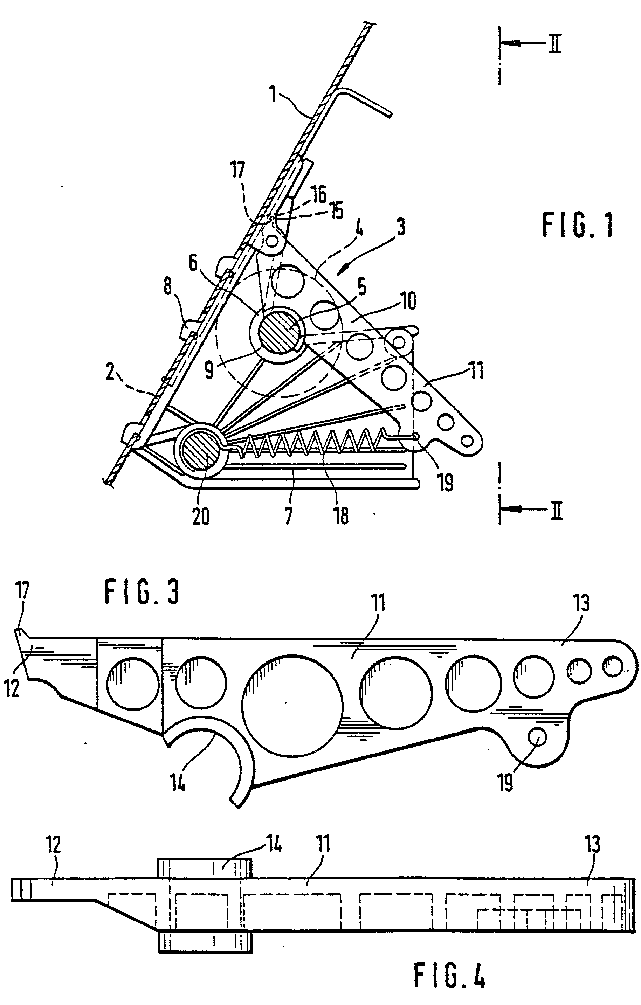

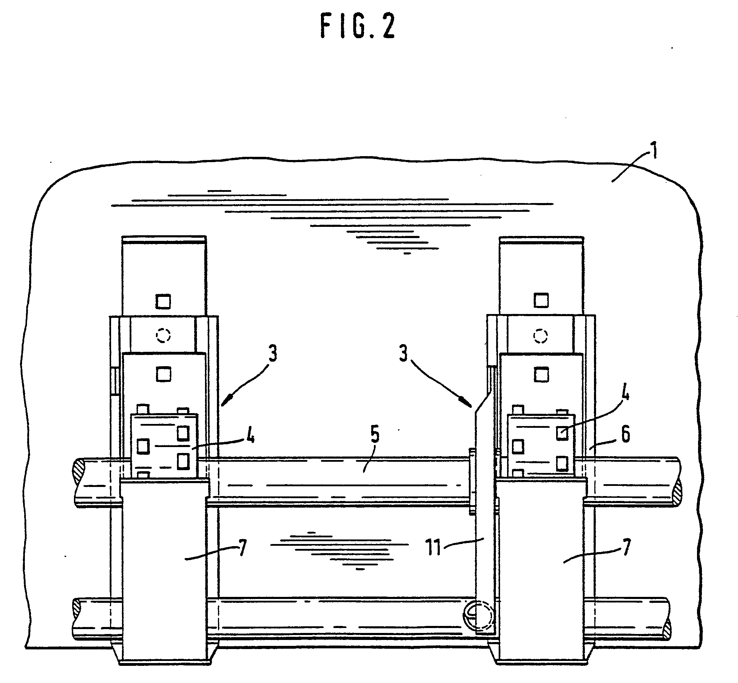

Fig. 1 die erfindungsgemäße Anordnung der Dosiereinrichtung in der Seitenansicht im Teilschnitt,

Fig. 2 die Dosiereinrichtung in der Ansicht II-II in Teilansicht,

Fig. 3 das als Hebel ausgebildete Lagerelement in der Seitenansicht in vergrößerter Darstellung und

Fig. 4 den Hebel in der Draufsicht.

Die Verteilmaschine ist mit dem Vorratsbehälter 1 ausgestattet, wobei sich in dem Vorratsbehälter mehrere quer zur Fahrtrichtung angeordnete Auslauföffnungen 2 befinden. Außerhalb des Vorratsbehälters 1 ist die Dosiervorrichtung 3 angeordnet, von der vor jeder Auslauföffnung 2 ein Särad 4 angeordnet ist. Diese Säräder 4 sind auf der Säwelle 5 drehfest angebracht. Die Säräder 4 sind zwischen den aufrechten Wandungen 6 der Sägehäuse 7 angeordnet. Die Sägehäuse 7 sind mit Hilfe von Kuppelvorrichtungen 8 an dem Vorratsbehälter 1 befestigt. Die Säwelle 5 ist in Lagerungen 9, deren Lagerschalen einen in radialer Richtung offenen Sektor aufweisen und die in den aufrechten Wandungen 6 der Sägehäuse 7 angeordnet sind, gelagert. Die Säwelle 5 wird durch eine nicht dargestellte Kraftquelle über ein ebenfalls nicht dargestelltes Regelgetriebe angetrieben.

Die Säwelle 5 wird durch die oberhalb der Säwelle angeordneten Lagerelemente (10, 11, 14) in den Lagerungen 9 gesichert. Die Lagerelemente (10, 11, 14) sind als Hebel 11 ausgebildet. Zwischen den beiden Enden 12 und 13 des Hebels 11 befindet sich eine einen in radialer Richtung offenen Sektor aufweisende Lagerschale 14, die auf die Säwelle 5 drückt. Das Ende 12 des Hebels 11 ist an den Wandungen 6 mittels der Lagerung 15 gelagert. Die Lagerung 15 weist die an dem Sägehäuse 7 angeordnete Öffnung 16 auf. Das Ende 12 des Hebels weist die Nase 17 auf, die in die Öffnung 16 faßt. Das der Nase 17 abgewandte Ende 13 des Hebels 11 weist das für die als Zugfeder 18 ausgebildete federnde Element vorgesehene Bohrung 19 auf. In diese Bohrung 19 wird die Zugfeder 18 eingehängt. Diese Zugfeder 18 ist zwischen der unter den Särädern 4 ebenfalls in den Sägehäusen 7 gelagerte Bodenklappenwelle 20 angeordnet. Somit ist also die Zugfeder 18 zwischen dem Hebel 11 und dem Vorratsbehälter 1 angeordnet.

Dieser von der Zugfeder 18 auf die Säwelle 5 drückende Hebel 11 wirkt somit als Bremseinrichtung. Somit ist also ein auf die Säwelle 5 einwirkendes Bremselement, welches als Hebel 11 ausgebildet ist, an der Sämaschine angeordnet. Dieses Bremselement bremst also die Säwelle 5 ab und erlaubt ein kontrolliertes Weiterdrehen der Säwelle 5. Sobald die die Drehung der Säwelle 5 hervorgerufene Energie unterbrochen wird, bleibt die Säwelle 5 und somit die Säräder 4 stehen.

Falls die Säwelle 5 mit den Särädern 4 gegen eine Säwelle mit anders ausgebildeten Särädern ausgetauscht werden soll, so werden in einfachster Weise die Hebel 11 derart verschwenkt, daß die Nase 17 aus der Öffnung 16 herausgedrückt wird. Somit können also die Hebel 11 in einfacher Weise entfernt werden. Nach dem Entfernen der Hebel 11 kann die Säwelle 5 mit den Särädern 4 aus den Lagerungen 9, deren Lagerschalen einen in radialer Richtung nach oben offenen Sektor aufweisen, herausgehoben werden. Anschließend kann die Säwelle mit Särädern wieder in die Sägehäuse 7 eingesetzt und die Säwelle in die Lagerungen 9, deren Lagerschalen einen in radialer Richtung nach oben offenen Sektor aufweisen, eingesetzt werden. Anschließend wird die Säwelle durch die Hebel 11 wieder gesichert, indem die Nase 17 der Hebel 11 in die Öffnung 16 eingerastet wird. Der Hebel 11 übernimmt somit einmal eine Sicherungs- und gleichzeitig eine Bremsfunktion.

## Patentansprüche

1. Verteilmaschine, insbesondere Sämaschine, mit einem Vorratsbehälter (1) und einer Dosiereinrichtung (3), die aus mehreren Dosiereinheiten besteht und auf einer Säwelle (5) angeordnete und zwischen je zwei aufrechten Wandungen (6) befindliche Säräder (4) enthält, wobei die Säwelle (5) über ein als Freilaufgetriebe ausgebildetes Regelgetriebe angetrieben wird und in Lagerungen (9), deren Lagerschalen einen in radialer Richtung offenen Sektor aufweisen, an dem Vorratsbehälter (1) gelagert und durch zumindest zwei Lagerelemente (10, 11, 14) in den Lagerungen (9) gesichert ist, dadurch gekennzeichnet, daß die Lagerelemente (10, 11, 14) in Richtung der Säwelle (5) federnd belastet sind, und dadurch bremsend auf die Säwelle (5) und/oder die Säräder (4) einwirken.

2. Verteilmaschine nach Anspruch 1, dadurch gekennzeichnet, daß an den Lagerelementen (10, 11, 14) ein federndes Element (18) angeordnet ist.

3. Verteilmaschine nach Anspruch 1, dadurch gekennzeichnet, daß die Lagerelemente (10, 11, 14) als Hebel (11) ausgebildet sind, daß sich zwischen den beiden Enden (12, 13) des Hebels (11) eine einen in radialer Richtung offenen Sektor aufweisende Lagerschale (14) befindet, daß das eine Ende (12) des Hebels (11) an dem Vorratsbehälter (1) und/oder den Wandungen (6) gelagert ist, und daß an dem anderen Ende (13) des Hebels (11) das federnde Element (18) angreift.

4. Verteilmaschine nach Anspruch 3, wobei unterhalb der Säräder (4) eine Bodenklappenwelle (20) angeordnet ist, dadurch gekennzeichnet, daß das federnde Element (18) zwischen der Bodenklappenwelle (20) und dem Hebel (11) angeordnet ist.

5. Verteilmaschine nach Anspruch 3, dadurch gekennzeichnet, daß das an dem Vorratsbehälter (1) gelagerte Ende (12) des Hebels (11) eine Nase (17) aufweist, die in eine an dem Vorratsbehälter (1) und/oder den Wandungen (6) angeordnete Öffnung (16) faßt.

6. Verteilmaschine nach Anspruch 1, dadurch gekennzeichnet, daß das Lagerelement (10, 11, 14) als Hebel (11) ausgebildet und an dem Vorratsbehälter (1) und/oder den Wandungen (6) gelagert ist und auf die Säwelle (5) drückt, und daß das federnde Element (18) zwischen dem Vorratsbehälter (1) und/oder den Wandungen (6) einerseits und dem Hebel (11) andererseits angeordnet ist.

## Claims

1. Distributing machine, especially a seed drill, including a hopper (1) and a metering means (3), which comprises a plurality of metering units and has seed wheels (4) disposed on a seed shaft (5) and situated between each pair of upright walls (6), the seed shaft (5) being driven by a variable speed gear, which is in the form of a freewheel gear and being mounted on the hopper (1) in bearing surfaces (9), the bearing bushes of which have a radially open sector, and the seed shaft is secured in the bearing surfaces (9) by at least two bearing elements (10, 11, 14), characterised in that the bearing elements (10, 11, 14) are resiliently loaded in the direction of the seed shaft (5) and thereby have a retarding effect upon the seed shaft (5) and/or the seed wheels (4).

2. Distributing machine according to claim 1, characterised in that a resilient element (18) is disposed on the bearing elements (10, 11, 14).

3. Distributing machine according to claim 1, characterised in that the bearing elements (10, 11, 14) are in the form of lever (11), in that a bearing bush (14), having a radially open sector, is situated between the two ends (12, 13) of the lever (11), in that one end (12) of the lever (11) is mounted on the hopper (1) and/or on the walls (6), and in that the resilient element (18) engages with the other end (13) of the lever (11).

4. Distributing machine according to claim 3, wherein a bottom hinged shaft (20) is disposed beneath the seed wheels (4), characterised in that the resilient element (18) is disposed between the bottom hinged shaft (20) and the lever (11).

5. Distributing machine according to claim 3, characterised in that the end (12) of the lever (11), mounted on the hopper (1), includes a projection portion (17) which engages in an aperture (16) provided in the hopper (1) and/or in the walls (6).

6. Distributing machine according to claim 1, characterised in that the bearing element (10, 11, 14) is in the form of lever (11) and is mounted on the hopper (1) and/or on the walls (6) and presses upon the seed shaft (5), and in that the resilient element (18) is disposed between the hopper (1) and/or the walls (6), on the one hand, and the lever (11), on the other hand.

## Revendications

1. Distributeur, notamment semoir comportant un réservoir d'alimentation (1) et un dispositif de dosage (3) formé de plusieurs éléments de dosage et d'un arbre de semoir (5) avec des roues de semoir (4) placées chaque fois entre deux parois montantes (6), l'arbre (5) étant entraîné par une transmission de réglage en forme de transmission à roue libre et des paliers (9) dont les coquilles de palier ont un secteur ouvert dans la direction radiale, paliers portés par le réservoir d'alimentation (1), l'arbre étant maintenu par au moins deux éléments de palier (10, 11, 14) dans les paliers (9), distributeur caractérisé en ce que les éléments de palier (10, 11, 14) sont chargés par des ressorts dans la direction de l'arbre de semoir (5), éléments de palier qui agissent comme freins sur l'arbre de semoir (5) et/ou les roues de semoir (4).

2. Distributeur selon la revendication 1, caractérisé en ce que sur les éléments de palier (10, 11, 14) on a un élément élastique (18).

3. Distributeur selon la revendication 1, caractérisé en ce que les éléments de palier (10, 11, 14) sont en forme de leviers (11) et entre les deux extrémités (12, 13) du levier (11) on a une coupelle de palier (14) présentant un secteur ouvert dirigé radialement et une extrémité (12) du levier (11) est reliée au réservoir d'alimentation (1) et/ou aux parois (6) et l'autre extrémité (13) du levier (11) est soumise à l'action de l'élément à ressort (18).

4. Distributeur selon la revendication 3 dans lequel un arbre pour des volets de sol (20) est prévu en dessous des roues de semoir (4), distributeur caractérisé en ce que l'élément à ressort (18) est placé entre l'arbre des volets de sol (20) et le levier (11).

5. Distributeur selon la revendication 3, caractérisé en ce que l'extrémité (12) du levier (11) montée sur le réservoir d'alimentation (1) comporte un bec (17) qui vient prendre dans une ouverture (16) du réservoir d'alimentation (1) et/ou les parois (6).

6. Distributeur selon la revendication 1, caractérisé en ce que l'élément de palier (10, 11, 14) est en forme de levier (11) et est monté sur le réservoir d'alimentation (1) et/ou les parois (6) et appuie sur l'arbre de semoir (5) et en ce que l'élément à ressort (18) est monté, d'une part, entre le réservoir d'alimentation (1) et/ou les parois (6) et, d'autre part, le levier (11).

FIG. 1

FIG. 3

FIG. 4

# FIG. 2